# EUROPEAN PATENT APPLICATION

(11) **EP 4 751 835 A1**
(43) Date of publication of application: **03.06.2026**
(21) Application number: 25214065.2
(22) Date of filing: 06.11.2025
(51) Int. Cl.: B23K 9/133

(54) **WELDING WIRE FEED APPARATUS**

(30) Priority: 28.11.2024 JP 2024207542
(71) Applicant: DAIHEN Corporation, Yodogawa-ku Osaka-shi Osaka 532-8512 (JP)
(72) Inventor: TANIGUCHI, Yusuke, Osaka-shi, Osaka, 532-8512 (JP)
(74) Representative: Hoffmann Eitle

(57) **Abstract**

In a pressurization mechanism (P1) of this welding wire feed apparatus (1), a pressurization arm (300) is provided such that one end side thereof is pivotable with respect to a bottom surface (111) and one end side of a locking pin (200) is engageable with the other end side thereof. The locking pin (200) includes, at the one end side, an adjustment screw (210) to be engaged with the pressurization arm (300) and includes, at the other end side, a spring case (220) that holds the adjustment screw (210) and is provided as being pivotable along a first wall (112). A pressurized state is selected by setting the locking pin (200) to a state substantially in parallel to the bottom surface (111) so as to be engaged with the pressurization arm (300). A non-pressurized state is selected by pivoting the locking pin (200) in a direction away from the bottom surface (111) along the first wall (112).

## Description

### CROSS REFERENCE TO RELATED APPLICATIONS

This nonprovisional application is based on Japanese Patent Application No. 2024-207542 filed with the Japan Patent Office on November 28, 2024, the entire contents of which are hereby incorporated by reference.

### BACKGROUND OF THE INVENTION

### Field of the Invention

The present invention relates to a welding wire feed apparatus.

### Description of the Background Art

In welding with a robot hand, in order to feed a welding wire to a portion to be welded, a welding wire feed apparatus to which a welding nozzle is attached on a tip end side is used.

Japanese Patent Laying Open No. 2023-093903, Japanese Patent Laying Open No. 2023-093902, Japanese Patent Laying Open No. 2023-093901, WO2016/114186, and the like disclose such a welding wire feed apparatus.

### SUMMARY OF THE INVENTION

In the welding wire feed apparatus described above, in order to send the welding wire toward the welding nozzle, a drive roller and a pressurization roller that sandwich the welding wire therebetween are provided. The drive roller is rotated by a drive motor provided inside the welding wire feed apparatus.

As the pressurization roller is pressurized toward the drive roller, the welding wire sandwiched between the drive roller and the pressurization roller is fed in a prescribed direction. A pressurization mechanism that presses the pressurization roller against the drive roller is adopted in the welding wire feed apparatus described above, however, a complicated structure is adopted.

In such a welding wire feed apparatus, ease in such works as assembly, cleaning, replacement of a component, and re-assembly has recently been demanded. If a configuration of the pressurization mechanism is complicated, however, a large number of man-hours for such works as assembly of the pressurization mechanism to the welding wire feed apparatus, cleaning, replacement of a component, and re-assembly are required.

This disclosure was made to solve problems above, and an object thereof is to provide a welding wire feed apparatus configured to achieve reduction in man-hours in such works as assembly of a pressurization mechanism to the welding wire feed apparatus, cleaning, replacement of a component, and re-assembly.
[1] A welding wire feed apparatus in the present disclosure is a welding wire feed apparatus that feeds a welding wire to a portion to be welded, and includes a main body portion provided such that the welding wire can be inserted therethrough and a welding wire feed mechanism that abuts on the welding wire and feeds the welding wire to the portion to be welded. The main body portion includes an accommodation region where the welding wire feed mechanism is accommodated. The accommodation region includes a bottom surface and a first wall located on an upstream side in a direction of feed of the welding wire and a second wall located on a downstream side in the direction of feed of the welding wire, the first wall and the second wall being arranged at a prescribed distance from the bottom surface in the direction of feed of the welding wire. The welding wire feed mechanism is placed on the bottom surface. The welding wire feed mechanism includes a drive roller that abuts on the welding wire and a pressurization roller that sandwiches the welding wire together with the drive roller. The pressurization roller is held by a pressurization mechanism configured to pressurize the pressurization roller toward the drive roller. The pressurization mechanism is provided such that selection between a pressurized state in which the pressurization roller is pressurized toward the drive roller and a non-pressurized state in which the pressurization roller is moved away from the drive roller can be made. The pressurization mechanism includes a pressurization arm that holds the pressurization roller and a locking pin for selection between the pressurized state and the non-pressurized state. The pressurization arm is provided such that one end side of the pressurization arm is pivotable with respect to the bottom surface and one end side of the locking pin is engageable with the other end side of the pressurization arm. The locking pin includes, at the one end side, a pressurization lever to be engaged with the pressurization arm and includes, at the other end side, a spring case that holds the pressurization lever and is provided as being pivotable along the first wall. The pressurized state is selected by setting the locking pin to a state substantially in parallel to the bottom surface so as to be engaged with the pressurization arm. The non-pressurized state is selected by pivoting the locking pin in a direction away from the bottom surface along the first wall.
[2] In the welding wire feed apparatus described in [1], the spring case is provided with a cylindrical through hole where the other end side of the pressurization lever is accommodated, and the spring case is pivotably fixed to the first wall by a rotation axis bolt that serves as a rotation axis around which the spring case is pivotable along the first wall.
[3] In the welding wire feed apparatus described in [2], the spring case includes a bolt nut and a coil spring that are accommodated inside the cylindrical through hole, the coil spring being configured to bias the bolt nut toward the other end, the pressurization lever includes, at one end side, an engagement head to be engaged with the pressurization arm and includes, at the other end side, a male screw that passes through the coil spring and is screwed to the bolt nut, and when the pressurized state is selected, the engagement head is rotated or backwardly rotated around an axis to adjust a compressed state of the coil spring against the bolt nut so as to adjust pressurization force applied by the pressurization roller to the drive roller.
[4] In the welding wire feed apparatus described in [2], the spring case includes a slit that extends along an axial direction of the cylindrical through hole and communicates to the outside, and the pressurization lever can be accommodated in the cylindrical through hole through the slit.
[5] In the welding wire feed apparatus described in any one of [1] to [4], the locking pin is provided such that an inclined state of the locking pin in which the locking pin is inclined toward the bottom surface is selectable while the pressurization mechanism is in the non-pressurized state, the drive roller is attached to a motor rotation shaft, and the spring case includes a rotation prevention mechanism that restricts rotation of the motor rotation shaft in attachment of the drive roller to or removal of the drive roller from the motor rotation shaft while the locking pin is in the inclined state.

The foregoing and other objects, features, aspects, and advantages of this invention will become more apparent from the following detailed description of this invention when taken in conjunction with the accompanying drawings.

### BRIEF DESCRIPTION OF THE DRAWINGS

Fig. 1 is a diagram showing an overall configuration of a welding nozzle and a welding wire feed apparatus attached to a robot arm.
Fig. 2 is a perspective view showing the overall configuration of the welding wire feed apparatus in an embodiment.
Fig. 3 is a side view showing the overall configuration of the welding wire feed apparatus in the embodiment.
Fig. 4 is a side view of a state in which a cover in the embodiment is opened.
Fig. 5 is a first perspective view of the state in which the cover in the embodiment is opened.
Fig. 6 is a second perspective view of the state in which the cover in the embodiment is opened.
Fig. 7 is a perspective cross-sectional view showing an internal configuration of the welding wire feed apparatus in the embodiment.
Fig. 8 is a plan view showing a locked state of a pressurization mechanism of the welding wire feed apparatus in the embodiment.
Fig. 9 is a perspective view showing the locked state of the pressurization mechanism of the welding wire feed apparatus in the embodiment.
Fig. 10 is a plan view showing a non-locked state of the pressurization mechanism of the welding wire feed apparatus in the embodiment.
Fig. 11 is a perspective view showing the non-locked state of the pressurization mechanism of the welding wire feed apparatus in the embodiment.
Fig. 12 is an exploded perspective view showing a configuration of a locking pin of the pressurization mechanism in the embodiment.
Fig. 13 is a perspective view showing the configuration of the locking pin of the pressurization mechanism in the embodiment.
Fig. 14 is an exploded perspective view showing a configuration of a pressurization arm of the pressurization mechanism in the embodiment.
Fig. 15 is a schematic diagram showing an operation of the locking pin of the pressurization mechanism in the embodiment.
Fig. 16 is a first diagram showing a rotation stop mechanism provided in the locking pin of the pressurization mechanism in the embodiment.
Fig. 17 is a second diagram showing the rotation stop mechanism provided in the locking pin of the pressurization mechanism in the embodiment.

### DESCRIPTION OF THE PREFERRED EMBODIMENTS

A welding wire feed apparatus in the present embodiment will be described below with reference to the drawings below. When the number, an amount, or the like is mentioned in an embodiment described below, the scope of the present invention is not necessarily limited to the number, the amount, or the like unless otherwise specified. The same or corresponding elements have the same reference characters allotted and redundant description may not be repeated. Combination of features in the embodiment as appropriate is originally intended.

### (Welding Wire Feed Apparatus 1)

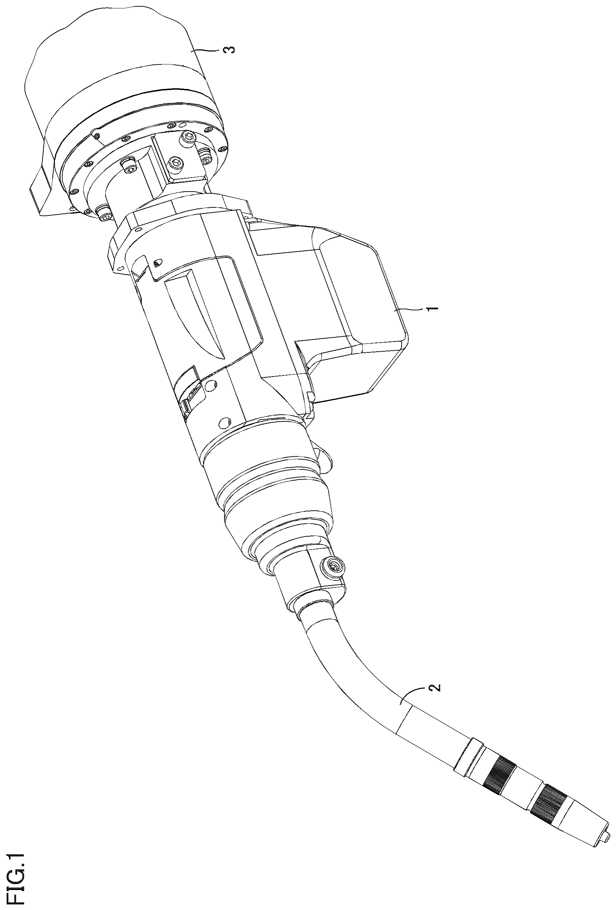

A welding wire feed apparatus 1 in the present embodiment will be described with reference to Figs. 1 to 3. In the description below, a downstream side in a direction (X direction) of feed of a welding wire 4 may be referred to as a front side and an upstream side may be referred to as a rear side. When the X direction is referred to as a front-rear direction, a direction intersecting with this front-rear direction may be referred to as a lateral direction.

Referring to Fig. 1, a welding nozzle 2 that feeds the welding wire to a portion to be welded is attached to the front side of welding wire feed apparatus 1. A robot arm 3 is coupled to the rear side of welding wire feed apparatus 1.

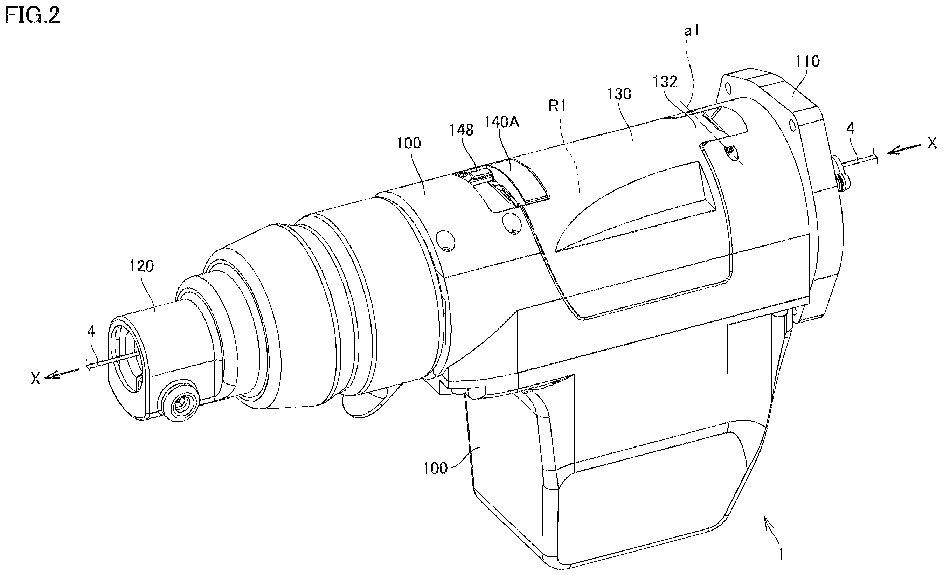

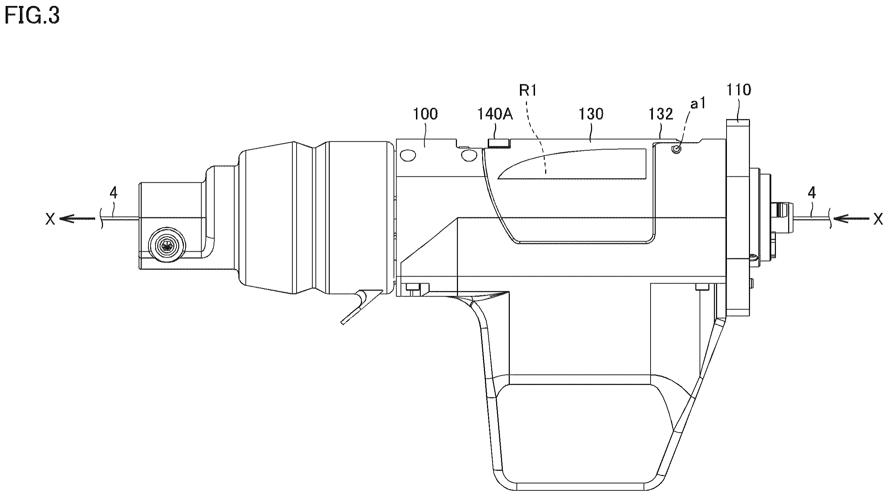

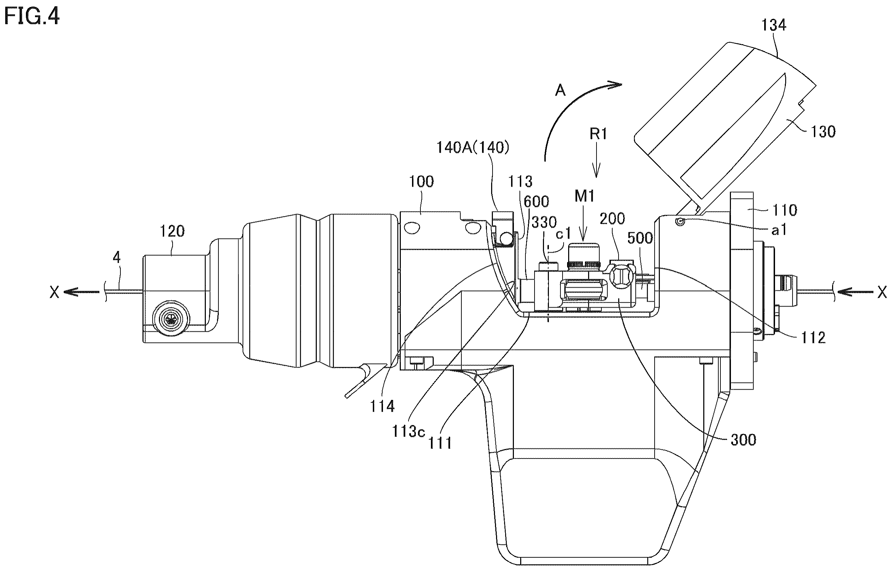

Referring to Figs. 2 and 3, welding wire feed apparatus 1 is an apparatus that feeds welding wire 4 to a portion to be welded. Welding wire feed apparatus 1 includes a housing 100 provided such that welding wire 4 can be inserted therethrough from the rear side toward a front end and an accommodation region R1 (see Fig. 4) where a welding wire feed mechanism that abuts on welding wire 4 and feeds welding wire 4 to the portion to be welded is accommodated. Housing 100 defines an outer shell of welding wire feed apparatus 1 including a hood 101 and a motor cover 102 which will be described later.

On the front side of housing 100, a nozzle holder 801 where welding nozzle 2 is to be attached is provided. On the rear side of housing 100, a robot arm attachment portion 110 to be coupled to robot arm 3 is provided.

Housing 100 includes a cover 130 that covers accommodation region R1. Cover 130 is provided with a cover pivotal support portion 132 on the rear side thereof, the cover pivotal support portion having a central axis a1 that extends in the direction intersecting with the direction of feed of welding wire 4. Cover 130 is provided to be opened and closed around central axis a1 with respect to housing 100. On the front side of cover 130, a locking mechanism 140A is provided between housing 100 and the cover. Cover 130 may be formed from a transparent member to allow external visual recognition of accommodation region R1 or from an opaque member not to allow external visual recognition of accommodation region R1.

By thus arranging central axis a1 of cover 130 on the rear side of cover 130, accommodation region R1 can widely open and lateral sides of a bottom surface 111 which will be described later can widely open to the outside.

A state in which cover 130 is opened rearward with respect to housing 100 will be described with reference to Figs. 4 to 6.

Accommodation region R1 is provided with a flat bottom surface 111, and a welding wire feed mechanism M1 is placed on bottom surface 111.

Accommodation region R1 includes a first wall 112 located on the upstream side (rear side) in the X direction of feed of welding wire 4 and a second wall 113 located on the downstream side (front side) in the X direction of feed of welding wire 4, the first wall and the second wall being arranged at a prescribed distance from bottom surface 111 in the X direction of feed of welding wire 4. Bottom surface 111 is open to the outside in the lateral direction (a direction perpendicular to the sheet plane of Fig. 4) intersecting with the direction of feed of welding wire 4.

In a side view defined by bottom surface 111, first wall 112, and second wall 113, an accommodation region edge portion 114 of accommodation region R1 in a recessed shape and a cover edge portion 134 of cover 130 are provided to match with each other in shape. Thus, when cover 130 is closed with respect to housing 100, accommodation region R1 can completely be covered with cover 130.

Locking mechanism 140A provided between cover 130 and housing 100 locks cover 130 to housing 100 by engagement of a locking tab 131t provided in a recess 131s in cover 130 with a locking member 140.

A first inclined wall 112c that extends in the direction intersecting with the X direction of feed of welding wire 4 is provided between bottom surface 111 and first wall 112. A second inclined wall 113c that extends in the direction intersecting with the X direction of feed of welding wire 4 is provided between bottom surface 111 and second wall 113.

Welding wire feed mechanism M1 arranged on flat bottom surface 111 includes at least a drive roller 400 that abuts on welding wire 4 and a pressurization roller 320 that sandwiches welding wire 4 together with drive roller 400. Drive roller 400 is driven by a drive mechanism provided on bottom surface 111 and provided inside housing 100. Pressurization roller 320 is provided in a pressurization arm 300. Pressurization arm 300 includes a pivot arm 310. An arm rotational support shaft 330 that pivotably supports pivot arm 310 with respect to bottom surface 111 is provided at one end side of pivot arm 310. A support rotation axis c1 of arm rotational support shaft 330 stands in a direction substantially perpendicular to bottom surface 111.

In a central portion of pivot arm 310, pressurization roller 320 described above is provided, and on a side opposite to arm rotational support shaft 330 of pivot arm 310 with pressurization roller 320 being interposed, a locking groove 310m is provided. This locking groove 310m is used to lock a state of welding wire 4 being sandwiched between pressurization roller 320 and drive roller 400.

A locking pin 200 including an adjustment screw 210 to be engaged with locking groove 310m is provided in first wall 112. Locking pin 200 includes adjustment screw 210 described above and a spring case 220 that applies elastic force in an axial direction of this adjustment screw 210. Spring case 220 is supported as being pivotable around a case rotation axis b1 provided at first wall 112. Case rotation axis b1 is an axis that extends in a direction perpendicular to first wall 112 and it is identical to the X direction of feed of welding wire 4.

First wall 112 is provided with an inlet wire guide 500 and second wall 113 is provided with an outlet wire guide 600. Welding wire 4 is sent from inlet wire guide 500 toward outlet wire guide 600. Welding wire 4 is sandwiched between pressurization roller 320 and drive roller 400 in a region between inlet wire guide 500 and outlet wire guide 600.

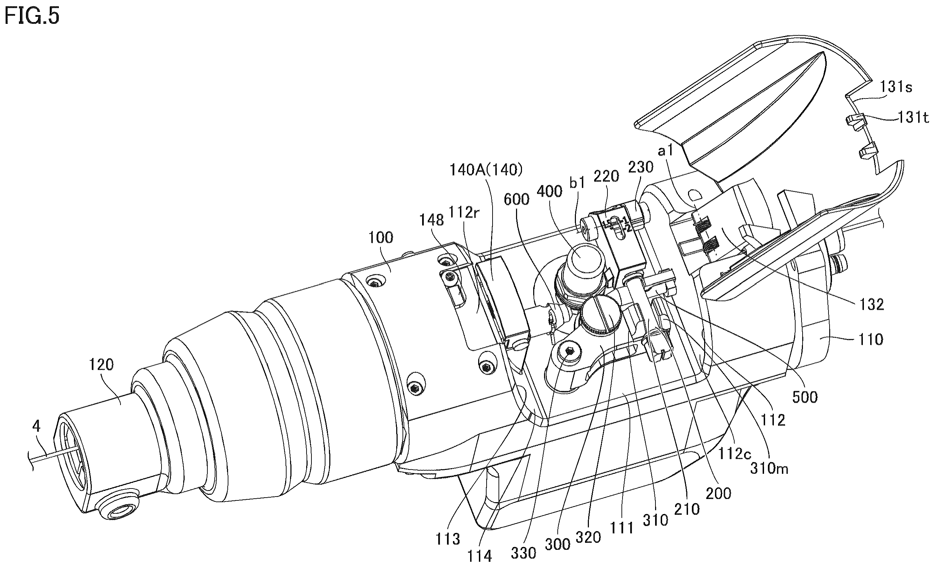

Fig. 5 shows a state in which locking pin 200 has locked pressurization arm 300. Force with which pressurization roller 320 and drive roller 400 sandwich welding wire 4 can be varied by adjusting elastic force of a spring provided in spring case 220.

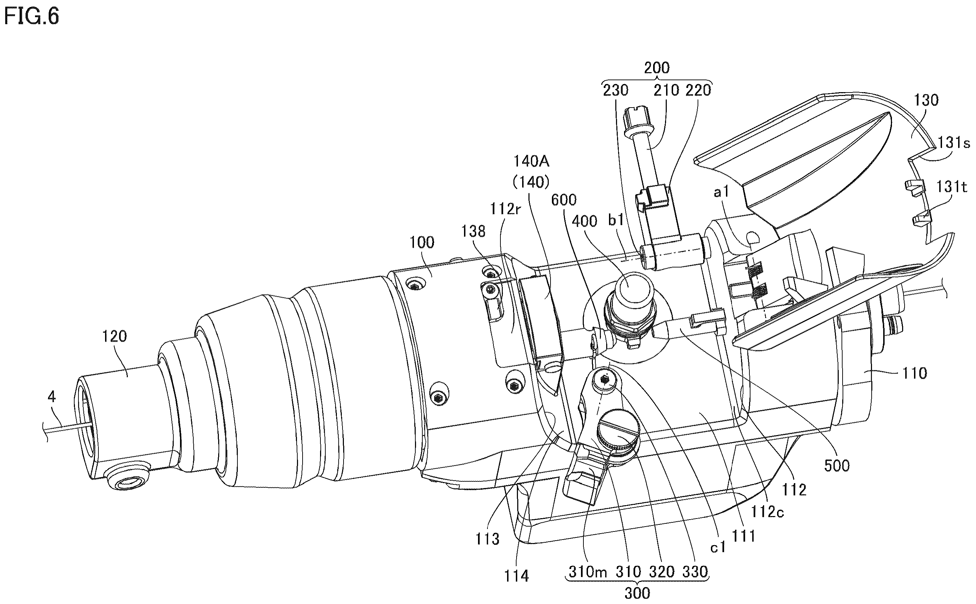

Fig. 6 shows a state in which locking pin 200 has unlocked pressurization arm 300. As adjustment screw 210 is pivoted around case rotation axis b1, adjustment screw 210 is released from locking groove 310m. Pivot arm 310 thus becomes pivotable around support rotation axis c1 of arm rotational support shaft 330.

### (Internal Configuration of Welding Wire Feed Apparatus 1)

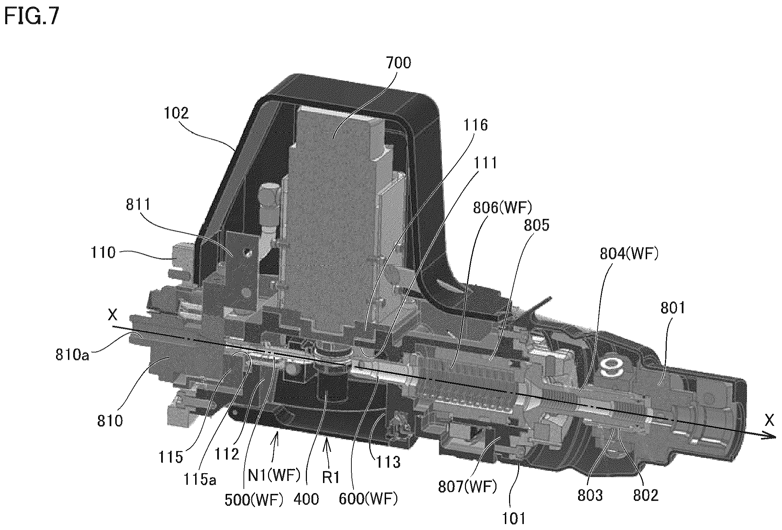

An internal configuration of welding wire feed apparatus 1 will be described with reference to Fig. 7. On a robot arm attachment portion 110 side of first wall 112, a plug body 810 is provided, with a first insulating wall 115 being interposed. A power feed block 811 is fixed to plug body 810. Plug body 810 is provided with a first wire passage 810a and first insulating wall 115 is provided with a second wire passage 115a. First wire passage 810a and second wire passage 115a communicate with inlet wire guide 500.

In a region of bottom surface 111 opposite to accommodation region R1, a drive motor 700 that drives drive roller 400 is arranged. A second insulating wall 116 is arranged between bottom surface 111 and drive motor 700. Drive motor 700 is covered with motor cover 102, and other internal devices are entirely covered with hood 101.

When viewed from outlet wire guide 600 attached to second wall 113, a coil spring 806, a swing shaft 804, and nozzle holder 801 are arranged in this order. A spring guide 805 is attached to an outer circumferential surface side of coil spring 806. A coil spring 806 side of swing shaft 804 is fixed by a swing shaft bearing 807 such that swing shaft 804 is swingable.

Welding wire 4 fed from outlet wire guide 600 passes through the inside of coil spring 806, swing shaft 804, and nozzle holder 801.

A cylindrical insulating ring 803 and an insulating bush 802 are attached to a nozzle holder 801 side of swing shaft 804.

When viewed along the X direction of feed of welding wire 4, at least inlet wire guide 500, welding wire feed mechanism M1, outlet wire guide 600, coil spring 806, swing shaft bearing 807, and swing shaft 804 define a wire feed path WF through which welding wire 4 is fed. Plug body 810 and power feed block 811 are arranged at a welding wire 4 inlet side of wire feed path WF and nozzle holder 801 is arranged at a welding wire 4 outlet side of wire feed path WF.

When external force is applied to welding nozzle 2 to which nozzle holder 801 is attached, nozzle holder 801 and swing shaft 804 swing. At this time, swing shaft 804 compresses coil spring 806 to absorb shock (a shock absorber mechanism). This shock is detected by a sensor (not shown) and operation control to stop welding wire feed apparatus 1 is performed.

### (Pressurization Mechanism P1)

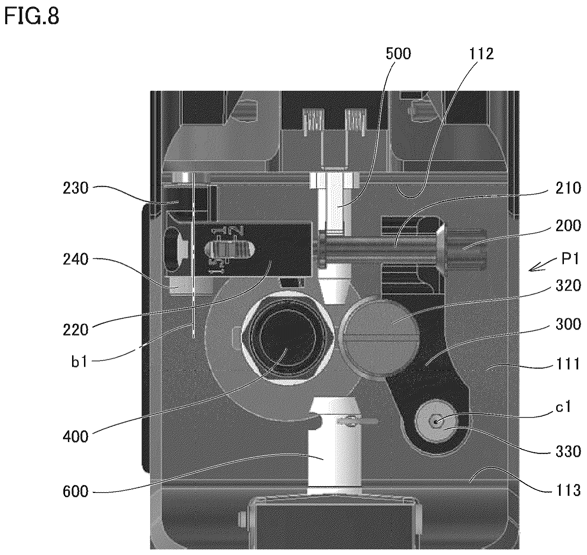

A pressurization mechanism P1 will be described below with reference to Figs. 8 to 17. Locking pin 200 and pressurization arm 300 are provided as pressurization mechanism P1. As already described, welding wire 4 is sandwiched between pressurization roller 320 and drive roller 400 in the region between inlet wire guide 500 and outlet wire guide 600.

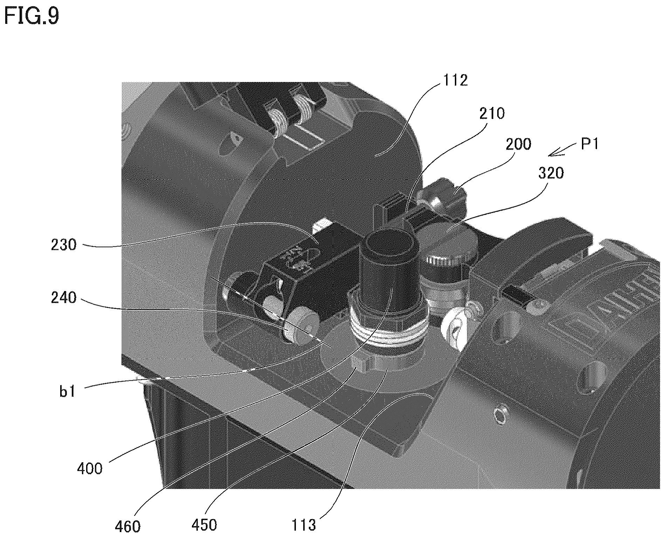

As shown in Figs. 8 and 9, locking pin 200 has locked pressurization arm 300 (a locked state). Force with which pressurization roller 320 and drive roller 400 sandwich welding wire 4 can be varied by adjusting elastic force of a spring (coil spring) provided in spring case 220.

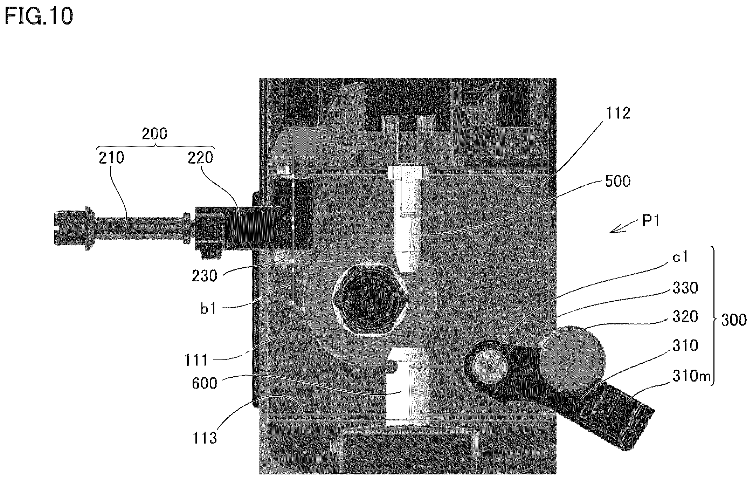

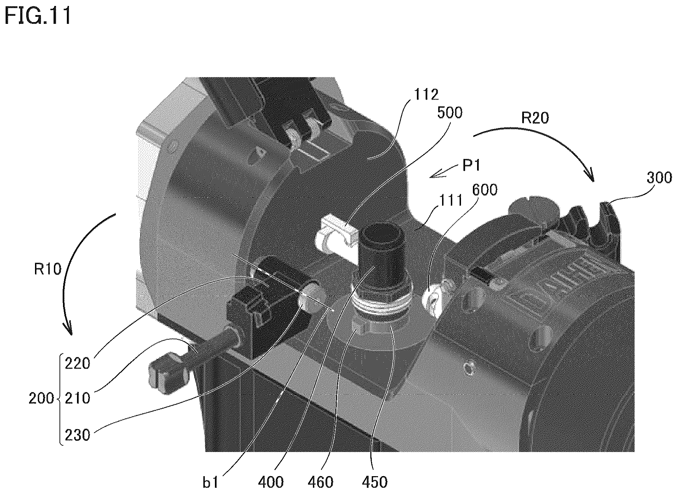

Figs. 10 and 11 show the state in which locking pin 200 has unlocked pressurization arm 300 (non-locked state). As adjustment screw 210 (pressurization lever) is pivoted around case rotation axis b1, adjustment screw 210 is released from locking groove 310m provided in pressurization arm 300. Locking pin 200 thus becomes pivotable along case rotation axis b1 (in a direction shown with an arrow R10 in the figure). Pivot arm 310 thus becomes pivotable around support rotation axis c1 of arm rotational support shaft 330 (in a direction shown with an arrow R20 in the figure).

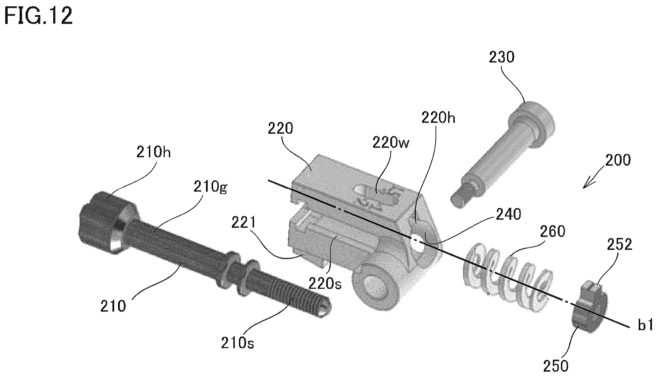

A detailed configuration of locking pin 200 and pressurization arm 300 included in pressurization mechanism P1 will be described below with reference to Figs. 12 to 17.

### (Configuration of Locking Pin 200)

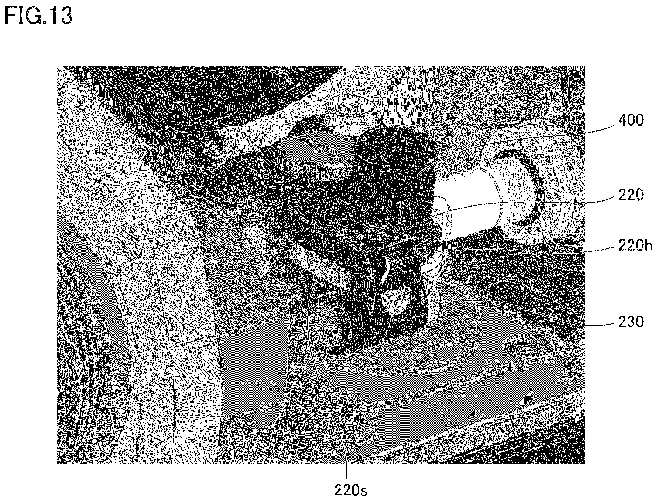

As shown in Figs. 12 and 13, locking pin 200 includes, at the one end side, adjustment screw 210 to be engaged with pressurization arm 300 and includes, at the other end side, spring case 220 that holds adjustment screw 210 and is provided as being pivotable along first wall 112.

Spring case 220 includes a cylindrical through hole 240 where the other end side of adjustment screw 210 is accommodated. Furthermore, spring case 220 is pivotably fixed to first wall 112 by a rotation axis bolt 230 (stripper bolt) that serves as a rotation axis around which the spring case is pivotable along first wall 112. Therefore, spring case 220 is provided with an axis hole 220h for insertion of rotation axis bolt 230 therethrough.

Spring case 220 includes a bolt nut 250 and a coil spring 260 that are accommodated in cylindrical through hole 240, coil spring 260 being configured to bias bolt nut 250 toward the other end. Coil spring 260 is arranged in cylindrical through hole 240 such that movement of one end side thereof is restricted and coil spring 260 abuts on bolt nut 250 at the other end side.

Bolt nut 250 is provided with a projection 252 that projects in a radial direction. Spring case 220 is provided with axis hole 220h that communicates with cylindrical through hole 240. Projection 252 of bolt nut 250 is fitted into axis hole 220h, so that a function to prevent bolt nut 250 from coming off can be secured and the number of parts can be reduced.

A position of projection 252 of bolt nut 250 can be checked through an opening window 220w provided in spring case 220. Therefore, bolt nut 250 plays a role as an indicator nut.

Adjustment screw 210 includes, at the one end side, an engagement head 210h to be engaged with pressurization arm 300. A dimension of an outer diameter of engagement head 210h is set to be larger than that of a shaft portion 210g of adjustment screw 210. An outer surface at the other end side of adjustment screw 210 is threaded to provide a male screw 210s that passes through coil spring 260 and is to be screwed to bolt nut 250.

Spring case 220 is provided with a slit 220s that extends along the axial direction of cylindrical through hole 240 and communicates to the outside. At the time assembly of locking pin 200, adjustment screw 210 can be accommodated in cylindrical through hole 240 through slit 220s.

Consequently, when adjustment screw 210 passes through coil spring 260 inside spring case 220 and when bolt nut 250 is screwed to male screw 210s inside spring case 220, positions of coil spring 260 and bolt nut 250 can visually be checked. Consequently, workability in assembly of locking pin 200 can be improved.

Furthermore, locking pin 200 in the present embodiment is constituted of only five components which are adjustment screw 210, spring case 220, rotation axis bolt 230, coil spring 260, and bolt nut 250. Therefore, the locking pin is small in number of parts, and also in this regard, assembly of locking pin 200 is easy.

Furthermore, locking pin 200 can be fixed to first wall 112 simply by inserting rotation axis bolt 230 through axis hole 220h, and workability in assembly of pressurization mechanism P1 can be improved. In fixing to first wall 112 with rotation axis bolt 230, for example, only a hex wrench for a hexagonal hole provided in rotation axis bolt 230 is used.

### (Configuration of Pressurization Arm 300)

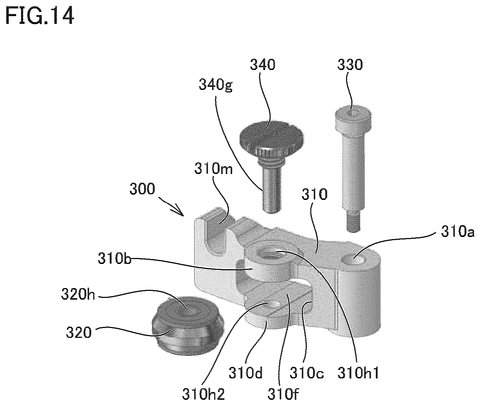

Referring now to Fig. 14, pressurization arm 300 includes pivot arm 310. Pivot arm 310 includes, at one end side, a rotation shaft hole 310a that passes through in a thickness direction, and includes, at the other end side, locking groove 310m to which shaft portion 210g of adjustment screw 210 is to be fitted.

In a central region of pivot arm 310, a pressurization roller accommodation space 310c opened in a direction orthogonal to the axial direction of rotation shaft hole 310a is provided in the thickness direction. Pressurization roller accommodation space 310c is a space that lies between a first shaft receiving portion 310b and a second shaft receiving portion 310d. First shaft receiving portion 310b is provided with a first shaft hole 310h1, and second shaft receiving portion 310d is provided with a second shaft hole 310h2.

After a pressurization roller shaft hole 320h of pressurization roller 320 is aligned with first shaft hole 310h1 and second shaft hole 310h2 while pressurization roller 320 is accommodated in pressurization roller accommodation space 310c, a rotation shaft 340g of a manually fastened bolt 340 is inserted through first shaft hole 310h1, pressurization roller shaft hole 320h, and second shaft hole 310h2. Assembly of pressurization arm 300 is thus completed. Though not shown, a female thread is provided in second shaft hole 310h2 and a male thread is provided at a tip end portion of rotation shaft 340g of manually fastened bolt 340. Therefore, manually fastened bolt 340 can be fixed at a side of second shaft receiving portion 310d.

Furthermore, at a surface of second shaft receiving portion 310d on a side of pressurization roller 320, a projection 310f is desirably provided to include second shaft hole 310h2. Though not shown, a similar projection is desirably provided also at a surface of first shaft receiving portion 310b on the side of pressurization roller 320. By providing the projection, an area of contact with pressurization roller 320 can be reduced and a contact resistance against pressurization roller 320 can be lowered.

Since this pressurization arm 300 is constituted of only four components which are pivot arm 310, manually fastened bolt 340, pressurization roller 320, and arm rotational support shaft 330, the number of components is small and assembly of pressurization arm 300 is easy.

A male thread is provided at an outer surface of a tip end portion of arm rotational support shaft 330, and a screw hole is provided at a prescribed position in bottom surface 111. Consequently, pivot arm 310 can be fixed to bottom surface 111 simply by inserting arm rotational support shaft 330 (stripper bolt) through rotation shaft hole 310a and fastening arm rotational support shaft 330 to bottom surface 111. Workability in assembly of pressurization mechanism P1 can thus be improved.

### (Adjustment of Pressurization Force)

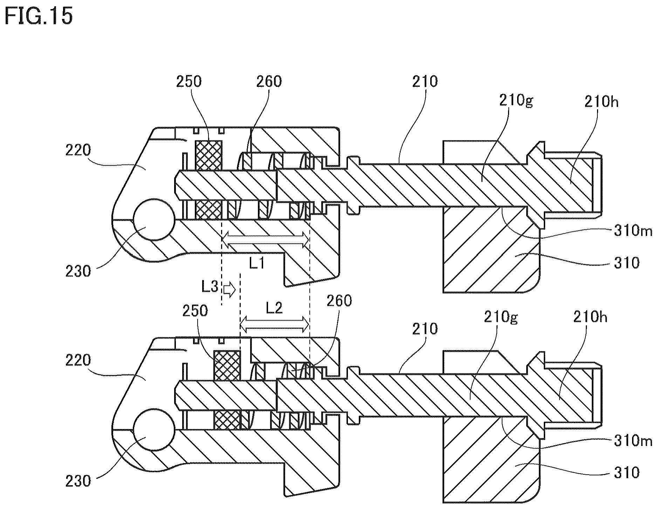

While a pressurized state has been selected in pressurization mechanism P1 as shown in Fig. 15, adjustment screw 210 is substantially horizontal with respect to bottom surface 111, shaft portion 210g of adjustment screw 210 is placed in locking groove 310m, and engagement head 210h is engaged with pivot arm 310.

By rotating or backwardly rotating engagement head 210h around an axis in this state, adjustment of the compressed state of coil spring 260 against bolt nut 250 can be made. For example, by moving bolt nut 250 by a distance L3 in the figure, coil spring 260 is compressed from a length L1 to L2. Biasing force corresponding to this compressive force conducts from engagement head 210h to pivot arm 310. Consequently, pressurization roller 320 supported by pivot arm 310 applies a pressure to drive roller 400.

### (Rotation Prevention Mechanism)

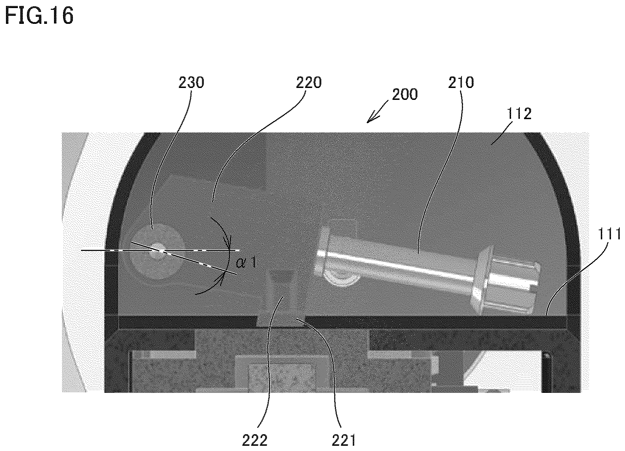

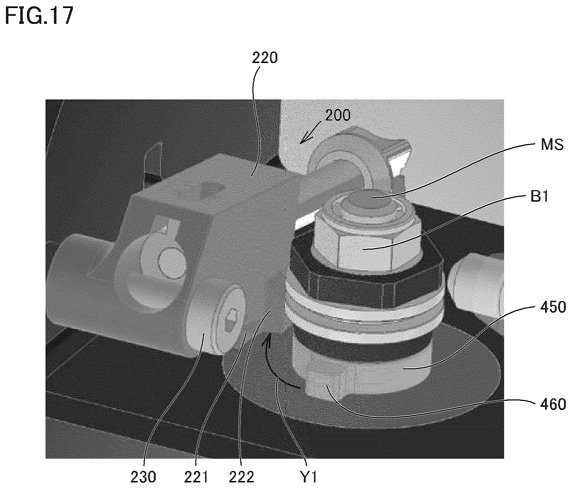

A rotation prevention mechanism provided in spring case 220 will be described with reference to Figs. 16 and 17. This rotation prevention mechanism is a mechanism useful in attachment of drive roller 400 to or removal of drive roller 400 from a motor rotation shaft MS at the time of maintenance of welding wire feed apparatus 1.

When inlet wire guide 500 is removed from first wall 112 as shown in Fig. 16, locking pin 200 can further rotate around rotation axis bolt 230 toward bottom surface 111. An angle of rotation (angle of inclination) α1 is approximately 15 degrees. This state of inclination of locking pin 200 is referred to as an "inclined state" below.

A projection 221 is provided on a bottom surface 111 side of spring case 220, and projection 221 is provided with a case protrusion 222 that projects in parallel to bottom surface 111.

Referring to Fig. 17, in attachment of drive roller 400 to or removal of drive roller 400 from motor rotation shaft MS, a fastening bolt B1 should be rotated with the use of a tool. At this time, in order to fix rotation of the motor rotation shaft, conventionally, a tool has had to separately be used to fix rotation of the motor rotation shaft.

In the present embodiment, a washer protrusion 460 that protrudes radially outward is provided at an insulating washer 450 that is located above bottom surface 111 and rotates together with the motor rotation shaft. Consequently, when fastening bolt B1 is rotated with the use of the tool (in a direction shown with an arrow Y1 in the figure) while locking pin 200 is in the inclined state, washer protrusion 460 abuts on case protrusion 222 provided at spring case 220. Rotation of the motor rotation shaft is thus restricted. This is also applicable to backward rotation.

Consequently, a tool does not have to separately be used to fix rotation of the motor rotation shaft, but drive roller 400 can be removed only with a single tool. Workability in attachment of drive roller 400 to or removal of drive roller 400 from motor rotation shaft MS can be improved.

As described above, according to welding wire feed apparatus 1 in the present embodiment, the number of man-hours in such works as assembly of pressurization mechanism P1 to welding wire feed apparatus 1, cleaning, replacement of a component, and re-assembly can be reduced.

Though an embodiment of the present invention has been described, it should be understood that the embodiment disclosed herein is illustrative and non-restrictive in every respect. The scope of the present invention is defined by the terms of the claims and is intended to include any modifications within the scope and meaning equivalent to the terms of the claims.

## Claims

1. A welding wire feed apparatus that feeds a welding wire (4) to a portion to be welded, the welding wire feed apparatus comprising:
a main body portion (100) provided such that the welding wire (4) can be inserted through the main body portion; and
a welding wire feed mechanism that abuts on the welding wire (4) and feeds the welding wire (4) to the portion to be welded, wherein
the main body portion (100) includes an accommodation region (R1) where the welding wire feed mechanism is accommodated,
the accommodation region (R1) includes
a bottom surface (111), and
a first wall (112) located on an upstream side in a direction of feed of the welding wire (4) and a second wall (113) located on a downstream side in the direction of feed of the welding wire (4), the first wall and the second wall being arranged at a prescribed distance from the bottom surface (111) in the direction of feed of the welding wire (4),
the welding wire feed mechanism (M1) is placed on the bottom surface (111),
the welding wire feed mechanism (M1) includes
a drive roller (400) that abuts on the welding wire (4), and
a pressurization roller (320) that sandwiches the welding wire together with the drive roller (400),
the pressurization roller (320) is held by a pressurization mechanism (P1) configured to pressurize the pressurization roller (320) toward the drive roller (400),
the pressurization mechanism (P1) is provided such that selection between a pressurized state in which the pressurization roller (320) is pressurized toward the drive roller (400) and a non-pressurized state in which the pressurization roller (320) is moved away from the drive roller (400) can be made,
the pressurization mechanism (P1) includes
a pressurization arm (300) that holds the pressurization roller (320), and
a locking pin (200) for selection between the pressurized state and the non-pressurized state,
the pressurization arm (300) is provided such that one end side of the pressurization arm is pivotable with respect to the bottom surface (111) and one end side of the locking pin (200) is engageable with the other end side of the pressurization arm,
the locking pin (200) includes, at the one end side, a pressurization lever (210) to be engaged with the pressurization arm (300), and includes, at the other end side, a spring case (220) that holds the pressurization lever (210) and is provided as being pivotable along the first wall,
the pressurized state is selected by setting the locking pin (200) to a state substantially in parallel to the bottom surface (111) so as to be engaged with the pressurization arm (300), and
the non-pressurized state is selected by pivoting the locking pin (200) in a direction away from the bottom surface (111) along the first wall (112).

2. The welding wire feed apparatus according to claim 1, wherein
the spring case (220) is provided with a cylindrical through hole (240) where the other end side of the pressurization lever (210) is accommodated, and
the spring case (220) is pivotably fixed to the first wall (112) by a rotation axis bolt (230) that serves as a rotation axis around which the spring case is pivotable along the first wall (112).

3. The welding wire feed apparatus according to claim 2, wherein
the spring case (220) includes a bolt nut (250) and a coil spring (260) that are accommodated inside the cylindrical through hole (240), the coil spring being configured to bias the bolt nut (250) toward the other end,
the pressurization lever (210) includes, at one end side, an engagement head (210h) to be engaged with the pressurization arm (300) and includes, at the other end side, a male screw (210s) that passes through the coil spring (260) and is screwed to the bolt nut (250), and
when the pressurized state is selected, the engagement head (210h) is rotated or backwardly rotated around an axis to adjust a compressed state of the coil spring (260) against the bolt nut (250) so as to adjust pressurization force applied by the pressurization roller (320) to the drive roller (400).

4. The welding wire feed apparatus according to claim 2 or 3, wherein
the spring case (220) includes a slit (220s) that extends along an axial direction of the cylindrical through hole (240) and communicates to outside, and
the pressurization lever (210) can be accommodated in the cylindrical through hole (240) through the slit (220s).

5. The welding wire feed apparatus according to any one of claims 1 to 4, wherein
the locking pin (200) is provided such that an inclined state of the locking pin in which the locking pin is inclined toward the bottom surface (111) is selectable while the pressurization mechanism (P1) is in the non-pressurized state,
the drive roller (400) is attached to a motor rotation shaft (MS), and
the spring case (220) includes a rotation prevention mechanism that restricts rotation of the motor rotation shaft (MS) in attachment of the drive roller (400) to or removal of the drive roller (400) from the motor rotation shaft (MS) while the locking pin (200) is in the inclined state.
